(19) **Europäisches Patentamt / European Patent Office / Office européen des brevets**

(11) **EP 3 472 648 B1**

(12) **FASCICULE DE BREVET EUROPEEN**

(45) Date de publication et mention de la délivrance du brevet:
**04.08.2021 Bulletin 2021/31**

(21) Numéro de dépôt: **17737329.7**

(22) Date de dépôt: **16.06.2017**

(51) Int Cl.:
*G01T 1/24* (2006.01)     *G01T 1/29* (2006.01)

(86) Numéro de dépôt international:
**PCT/FR2017/051577**

(87) Numéro de publication internationale:
**WO 2017/216499 (21.12.2017 Gazette 2017/51)**

(54) **PROCÉDÉ ET DISPOSITIF MONOLITHIQUE POUR CARACTÉRISER LA QUALITÉ D'UN FAISCEAU DE RAYONS X**

VERFAHREN UND VORRICHTUNG ZUR BESTIMMUNG DER QUALITÄT EINES RÖNTGENSTRAHLS

METHOD AND DEVICE FOR CHARACTERISING AN X-RAY BEAM QUALITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.06.2016 FR 1655609**

(43) Date de publication de la demande:
**24.04.2019 Bulletin 2019/17**

(73) Titulaires:
• **Université Claude Bernard Lyon I**
  **69100 Villeurbanne (FR)**
• **CENTRE NATIONAL DE LA RECHERCHE SCIENTIFIQUE (CNRS)**
  **75016 Paris (FR)**
• **Institut National des Sciences Appliquées de Lyon**
  **69621 Villeurbanne Cedex (FR)**
• **Ecole Centrale De Lyon**
  **69134 Ecully Cedex (FR)**

(72) Inventeurs:
• **LU, Guo-Neng**
  **69190 Saint-Fons (FR)**
• **PITTET, Patrick**
  **69270 Fontaines-Saint-Martin (FR)**
• **WANG, Ruoxi**
  **Beijing 100083 (CN)**

(74) Mandataire: **Regimbeau**
  **20, rue de Chazelles**
  **75847 Paris Cedex 17 (FR)**

(56) Documents cités:
• **COURCIER THIERRY ET AL: "CMOS BQJ detector chip with integrated charge-amplifiers for fluorescence measurements", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, vol. 190, 3 septembre 2013 (2013-09-03), pages 288-294, XP028764362, ISSN: 0925-4005, DOI: 10.1016/J.SNB.2013.08.021**

EP 3 472 648 B1

**Description**

La présente invention concerne le domaine technique de la caractérisation de la qualité de faisceaux de rayons X et elle vise plus particulièrement la caractérisation de la qualité de faisceaux de rayons X dans le domaine de l'imagerie médicale.

Dans le domaine notamment de la radiologie, il apparaît nécessaire de caractériser la qualité des faisceaux de rayons X utilisés, pour des questions d'assurance qualité et de radioprotection des patients et des personnels. La propriété dosimétrique principale des faisceaux de rayons X dans la plage 40-150kVp est que la dose atteint son maximum proche de la surface du patient, c'est-à-dire dans les premiers millimètres et décroît avec la profondeur, la vitesse de décroissance dépendant des propriétés énergétiques du faisceau incident (Robin Hill et al. Phys. Med. Bio. 59 (2014) R183-R231). D'une manière générale, la caractérisation de la qualité des faisceaux de rayons X repose, sur la vitesse de décroissance du débit de dose en fonction de la profondeur après le maximum de débit de dose. La qualité de faisceau est directement reliée aux caractéristiques spectrales du faisceau de rayons X et notamment à l'énergie moyenne de ce spectre.

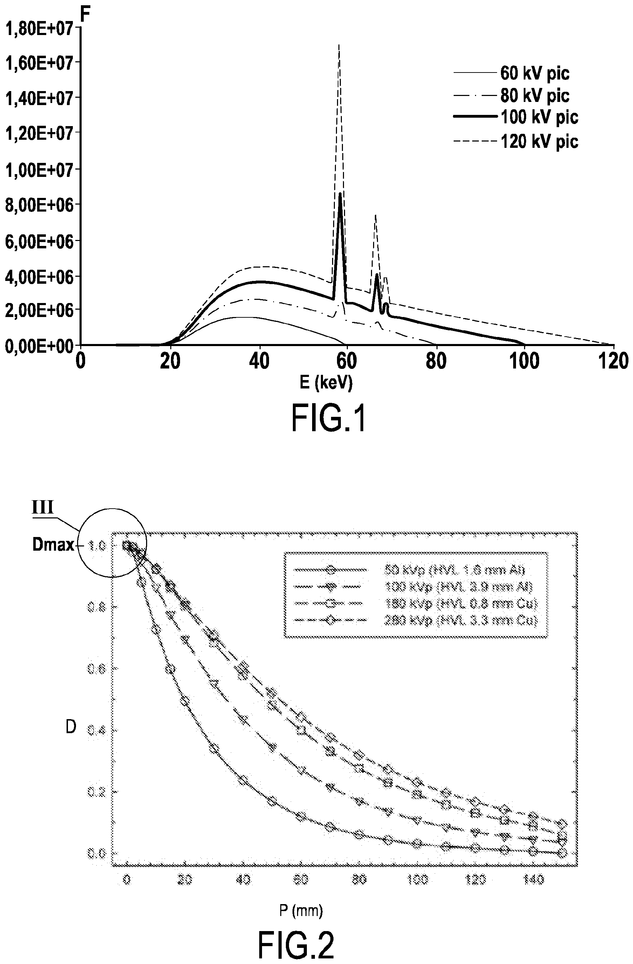

La Figure 1 montre l'évolution spectrale de faisceaux de rayons X obtenus pour différentes tensions du tube de production des faisceaux de rayons X, les autres paramètres étant fixés (angle, filtration, matériau et épaisseur de la fenêtre, forme du collimateur, ...). Chaque spectre a une énergie moyenne différente et donc une qualité de faisceau spécifique.

Dans ce domaine, il est connu de caractériser les propriétés énergétiques d'un faisceau de rayons X en utilisant un matériau métallique atténuateur et par la détermination de l'épaisseur de demi-atténuation c'est-à-dire l'épaisseur nécessaire pour réduire de moitié le débit de dose (Ma et al. Medical Physics Vol. 28, N°. 6 2001). Il est d'usage d'utiliser un empilement de feuilles métalliques pour déterminer l'épaisseur de demi-atténuation. Cette méthode manuelle présente une mise en œuvre relativement longue et ne donne pas accès à divers autres paramètres utiles pour caractériser la qualité de faisceaux de rayons X. Pour faciliter cette mise en œuvre, la demande de brevet US 2013-016808-A1 propose un système permettant de faire varier l'épaisseur du matériau atténuateur d'une manière continue.

Une autre approche pour caractériser un faisceau de rayons X, décrite dans le brevet US 5 761 270, sur laquelle est basée un instrument de la société RAYSAFE, consiste à utiliser, sur une matrice de diodes silicium, différents filtres métalliques atténuateurs. Cet instrument présente une résolution spatiale limitée puisqu'elle ne peut pas être inférieure à la taille de la matrice. Pour augmenter la résolution spatiale, le brevet US 9 405 021 décrit un détecteur comprenant plusieurs diodes empilées à distances les unes des autres avec un filtre de rayonnement entre chaque niveau de diodes. Par ailleurs, même si les instruments décrits dans ces deux brevets sont compacts, ils présentent l'inconvénient de ne pas être radio-transparent.

Encore une autre méthode s'appuie sur l'atténuation de la dose avec la profondeur dans l'eau et propose d'utiliser le ratio des mesures dosimétriques à deux profondeurs dans l'eau, typiquement à 2 cm et 5 cm, pour spécifier la qualité du faisceau (K. R. Rosser, "An alternative beam quality index for medium-energy x-ray dosimetry," Phys. Med. Biol. 43, 587-598, 1998). Cette méthode ne permet pas de développer un système compact et de caractérisation rapide de la qualité du faisceau.

La présente invention vise à remédier aux inconvénients de l'art antérieur, en proposant une nouvelle technique permettant d'acquérir en temps réel, diverses informations sur les caractéristiques énergétiques d'un faisceau de rayons X pour caractériser sa qualité, tout en présentant une résolution spatiale élevée.

Un autre objet de l'invention est de proposer une technique conçue pour caractériser la qualité d'un faisceau de rayons X tout en permettant d'être radio-transparente.

Pour atteindre de tels objectifs, l'invention vise à proposer un procédé pour caractériser la qualité d'un faisceau de rayons X comportant un profil connu de dépôt de dose dans un corps présentant une zone d'accroissement de débit de dose à l'intérieur dudit corps s'étendant entre la surface d'entrée du faisceau et une profondeur caractéristique où le débit de dose déposé est maximal, le procédé comportant les étapes suivantes :

- projeter ledit faisceau de rayons X sur un détecteur monolithique intégrant m jonctions p-n empilées (m ≥ 3) en profondeur dudit détecteur avec au moins trois jonctions distribuées dans la zone d'accroissement de débit de dose ;
- récupérer les m signaux délivrés par les jonctions p-n du détecteur ;
- et traiter les m signaux pour caractériser la qualité du faisceau de rayons X.

Selon une variante avantageuse de réalisation, le procédé consiste à traiter les m signaux en calculant m-1 valeurs de différentiation relative du premier ordre $d_i$ suivantes :

$$d_i = \left. \frac{(r_{i+1} - r_i)}{\frac{(r_{i+1} + r_i)}{2}} \right|_{i=1 \text{ à } m-1}$$

Selon une autre variante avantageuse de réalisation, le procédé consiste à partir des m-1 valeurs de différentiation relative de premier ordre, à calculer les m-2 valeurs de différentiation relative du second ordre suivantes :

$$d'_i = \frac{(d_{i+1} - d_i)}{\frac{(d_{i+1} + d_i)}{2}}\bigg|_{i=1 \text{ à } m-2}$$

Avantageusement, le procédé consiste, à partir des m valeurs de signaux r, m-1 valeurs de différentiation relative de premier ordre $d_i$ et des m-2 valeurs de différentiation relative du second ordre $d'_i$, à déterminer l'allure du profil de dépôt de débit de dose sur la zone d'accroissement de débit de dose ainsi que la profondeur caractéristique.

Selon une caractéristique avantageuse, le procédé consiste à déterminer la courbure du profil du débit de dose à partir des m-2 valeurs de différentiation relative du second ordre. Cette courbure en zone d'accroissement de débit de dose prend des valeurs négatives, et présente une fonction monotone de l'énergie caractéristique du faisceau, permettant de remonter à la qualité du faisceau de rayons X incident.

Avantageusement, le procédé consiste à déterminer la vitesse d'accroissement du profil du débit de dose sur la région avant l'équilibre électronique (région dite de « build-up » en anglais), à partir des m-1 valeurs de différentiation relative de premier ordre, cette vitesse d'accroissement permettant de remonter à la qualité du faisceau de rayons X incident.

Selon une autre variante avantageuse de réalisation, le procédé consiste à partir des m-1 valeurs de différentiation relative de premier ordre et des m-2 valeurs de différentiation relative du second ordre, à constituer un vecteur de 2m-3 éléments défini par :

$$D = \begin{bmatrix} d_1 \\ \vdots \\ d_{m-1} \\ d'_1 \\ \vdots \\ d'_{m-2} \end{bmatrix}$$

Selon une autre variante avantageuse de réalisation, le procédé consiste, à partir des m-1 valeurs de différentiation relative de premier ordre et des m-2 valeurs de différentiation relative du second ordre, à constituer un vecteur de 2m-3 éléments défini par :

$$D = \begin{bmatrix} \alpha_1\, d_1 \\ \vdots \\ \alpha_{m-1}\, d_{m-1} \\ \alpha'_1\, d'_1 \\ \vdots \\ \alpha'_{m-2}\, d'_{m-2} \end{bmatrix}$$

où $\alpha_1 ... \alpha_{m-1}$, et $\alpha'_1 ... \alpha'_{m-2}$ sont des coefficients de pondération compris entre 0 et 1.

Par exemple, le procédé consiste, pour un équipement générateur de rayons X dont les réglages en énergie permettent d'obtenir n spectres avec des qualités de faisceau différentes, à déterminer la corrélation vectorielle entre le vecteur mesuré et n vecteurs de référence prédéterminés correspondants à ces n spectres, le maximum de corrélation indiquant le spectre du faisceau de rayons X et donc la qualité de ce faisceau.

Par exemple, le procédé consiste, pour un équipement générateur de rayons X dont les réglages y compris en filtration permettent d'obtenir k configurations d'utilisation avec des qualités de faisceau différentes, à déterminer la corrélation vectorielle entre le vecteur mesuré et k vecteurs de référence prédéterminés pour ces configurations, le maximum de corrélation indiquant la configuration utilisée et donc la qualité du faisceau de rayons X.

Avantageusement, le procédé consiste à exploiter d'une part, les m signaux des jonctions p-n qui sont proportionnels au débit de dose du faisceau incident et d'autre part, la qualité de faisceau pour déterminer le débit de dose à une profondeur donnée c'est-à-dire en des points d'intérêt.

Selon une caractéristique avantageuse de réalisation, le procédé consiste à répartir les m jonctions p-n de manière à positionner au moins trois jonctions p-n dans la zone d'accroissement de débit de dose pour le faisceau de rayons X avec le plus faible niveau d'énergie, et au moins deux jonctions p-n à proximité de la profondeur caractéristique pour le faisceau de rayons X avec le plus fort niveau d'énergie.

L'invention vise également à proposer un dispositif pour caractériser la qualité d'un faisceau de rayons X comportant un profil connu de dépôt de dose dans un corps, présentant une zone d'accroissement de débit de dose à l'intérieur dudit corps s'étendant entre la surface d'entrée du faisceau et une profondeur caractéristique où le débit de dose déposé est maximal. Le dispositif selon l'invention comporte un détecteur monolithique à m jonctions p-n empilées en profondeur dudit détecteur avec au moins trois desdites jonctions distribuées dans une zone correspondant à la zone d'accroissement de débit de dose pour l'indice de qualité de faisceau le plus faible de la plage de mesure, le détecteur étant relié à un circuit de mesure et de traitement récupérant les m signaux délivrés par les m jonctions p-n du détecteur et traitant les m signaux pour caractériser la qualité du faisceau de rayons X.

Selon un exemple de réalisation, le détecteur monolithique à m jonctions p-n empilées en profondeur est un détecteur à multiples jonctions p-n enterrées ou un détecteur obtenu par des procédés de fabrication ou d'intégration microélectronique 3D. Avantageusement, au moins trois des jonctions p-n sont distribuées dans une zone de profondeur au plus égale à 20 $\mu$m à partir de la face exposée du détecteur monolithique.

Selon une caractéristique de l'invention, le circuit de mesure et de traitement est adapté pour :

- récupérer les m signaux $r_i$ provenant des jonctions p-n à partir des m signaux délivrés par le détecteur ;
- calculer les m-1 grandeurs de différentiation relative suivantes :

$$d_i = \left. \frac{(r_{i+1} - r_i)}{\frac{(r_{i+1} + r_i)}{2}} \right|_{i=1 \, \text{à} \, m-1}$$

- calculer, à partir des m-1 grandeurs de différentiation relative, les m-2 grandeurs de différentiation relative du second ordre suivantes :

$$d'_i = \left. \frac{(d_{i+1} - d_i)}{\frac{(d_{i+1} + d_i)}{2}} \right|_{i=1 \, \text{à} \, m-2}$$

Selon une autre caractéristique de l'invention, le circuit de mesure et de traitement est adapté pour calculer le maximum de la corrélation vectorielle entre n vecteurs de référence et le vecteur à 2m-3 éléments suivant :

$$D = \begin{bmatrix} \alpha_1 \, d_1 \\ \vdots \\ \alpha_{m-1} \, d_{m-1} \\ \alpha'_1 \, d'_1 \\ \vdots \\ \alpha'_{m-2} \, d'_{m-2} \end{bmatrix}$$

où $\alpha_1... \alpha_{m-1}$, et $\alpha'_1... \alpha'_{m-2}$ sont des coefficients de pondération compris entre 0 et 1.

Diverses autres caractéristiques ressortent de la description faite ci-dessous en référence aux dessins annexés qui montrent, à titre d'exemples non limitatifs, des formes de réalisation de l'objet de l'invention.

La **Figure 1** montre l'évolution spectrale de faisceaux de rayons X (flux F en keV$^{-1}$.cm$^{-2}$.mA$^{-1}$.s$^{-1}$) en fonction de l'énergie E (keV), et cela pour différentes tensions du tube de production des faisceaux de rayons X.

La **Figure 2** illustre le profil de débit de dose relatif D d'un faisceau de rayons X en fonction de la profondeur P (mm) à l'intérieur d'un corps, pour différentes tensions du tube de production des faisceaux de rayons X.

La **Figure 3** illustre l'évolution du débit de dose relatif D dans la zone d'accroissement de débit de dose s'étendant entre la surface d'entrée du faisceau et une profondeur caractéristique P où le débit de dose déposé est maximal.

La **Figure 4** est un exemple de réalisation d'un dispositif pour caractériser la qualité d'un faisceau de rayons X.

La **Figure 5** est un autre exemple de réalisation d'un dispositif pour caractériser la qualité d'un faisceau de rayons X permettant une irradiation par la face arrière.

La **Figure 6** est un exemple de réalisation d'un détecteur obtenu par des procédés de fabrication ou d'intégration microélectronique 3D.

La **Figure 7** illustre les valeurs de différentiation relative de premier ordre des signaux délivrés par le détecteur, pour différentes énergies du faisceau de rayons X.

La **Figure 8** illustre les valeurs de différentiation relative de second ordre des quatre signaux délivrés par le détecteur, pour différentes énergies du faisceau de rayons X.

La **Figure 9** illustre les valeurs d'un vecteur de différentiation relative des signaux délivrés par le détecteur, pour différentes énergies du faisceau de rayons X.

La **Figure 10** illustre les valeurs de corrélation pour différentes énergies du faisceau de rayons X, entre le vecteur de différentiation relative pour le faisceau de rayons X et des vecteurs de référence tabulés.

L'objet de l'invention concerne un dispositif **1** à base de silicium adapté pour caractériser la qualité d'un faisceau **F** de rayons X comportant un profil connu de dépôt de dose dans un corps, couramment désigné par rendement en profondeur (« depth-dose curve » ou « percentage depth dose distribution » en anglais). La **Fig. 2** illustre le profil de débit de dose relatif **D** d'un faisceau de rayons X en fonction de la profondeur **P** à l'intérieur d'un corps, pour différents spectres énergétiques qui correspondent à différentes tensions d'alimentation du tube de production du faisceau de rayons X (Robin Hill et al. Phys. Med. Bio. 59 (2014) R183-R231). Il est ainsi connu que le débit de dose d'un faisceau de rayons X décroit en fonction de la profondeur après le maximum de débit de dose $\mathbf{D_{max}}$. Dans la plage 40-150kVp, $\mathbf{D_{max}}$ se situe dans les premiers millimètres de la surface d'entrée du faisceau dans un corps. Il est à noter que dans le cas du silicium, ce maximum se situe entre quelques micromètres et une dizaine de micromètres. Cette représentation macroscopique qui est largement répandue dans l'art antérieur conduit à considérer que le maximum de débit de dose $\mathbf{D_{max}}$ se situe à l'entrée du corps.

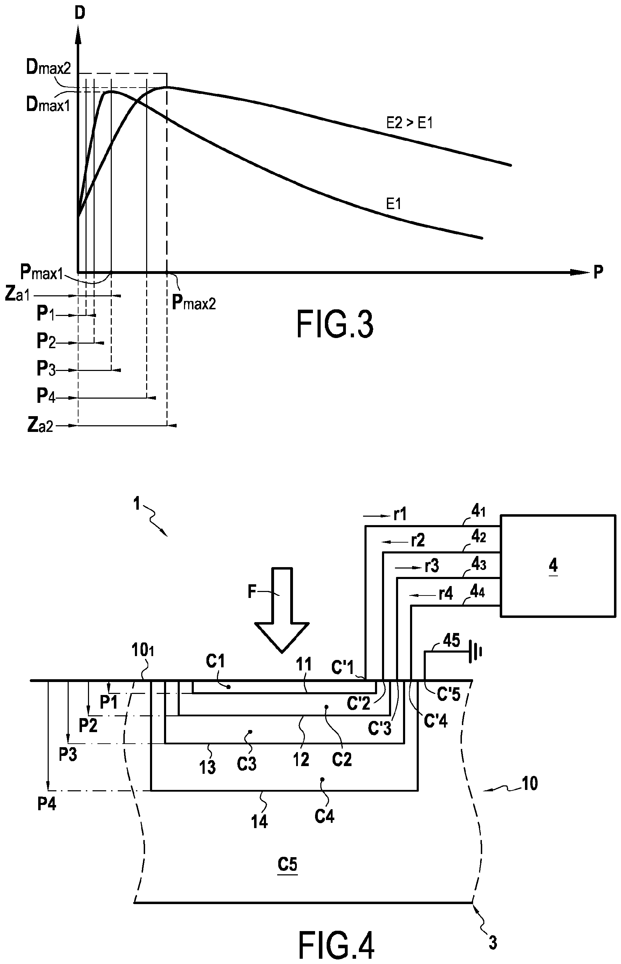

Cependant, cette considération macroscopique ne prend pas en compte le fait que le débit de dose d'un faisceau de rayons X présente une zone d'accroissement rapide de débit de dose à l'intérieur dudit corps. Tel que cela ressort plus précisément de la **Fig. 3,** (http:www-naweb.iaea.org/DMRP/documents/Chapter6.pdf) le débit de dose relatif $D$ d'un faisceau de rayons X présente une zone d'accroissement de débit de dose $Z_a$ s'étendant entre la surface d'entrée du faisceau (Z=0) et une profondeur caractéristique $P_{max}$ où le débit de dose déposé $D_{max}$ est maximal. Cette zone superficielle d'accroissement de débit de dose $Z_a$ s'étendant jusqu'à la profondeur caractéristique $P_{max}$, est désignée par« build-up » en anglais et dépend des propriétés énergétiques du faisceau de rayons X.

Tel que cela ressort de la **Fig. 3,** la dose absorbée est la plus élevée non pas à la surface du corps, mais à une profondeur **P** d'autant plus grande que l'énergie moyenne du spectre du faisceau de rayons X est élevée. Ainsi, pour un faisceau **F2** de rayons X, présentant une énergie moyenne <E2> supérieure à une énergie moyenne <E1> d'un faisceau **F1** de rayons X, la profondeur caractéristique $P_{max2}$ où le débit de dose déposé $D_{max}$ est maximal, est plus grande que la profondeur caractéristique $P_{max1}$ pour le faisceau de rayons X d'énergie E1. En d'autres termes, la zone d'accroissement de débit de dose $Z_{a1}$ pour le faisceau de rayons X d'énergie moyenne <E1> est plus petite que la zone d'accroissement de débit de dose $Z_{a2}$ pour le faisceau de rayons X d'énergie moyenne <E2>.

Tel que cela ressort plus précisément de la **Fig.4,** le dispositif **1** selon l'invention pour caractériser la qualité d'un faisceau **F** de rayons X, comporte un détecteur **3** intégrant de manière monolithique m jonctions p-n empilées en profondeur par rapport à sa surface et dont au moins trois de ces jonctions p-n sont distribuées dans la zone d'accroissement $Z_a$ de débit de dose d'un faisceau de rayons X.

Les m jonctions p-n du détecteur **3** délivrent m signaux électriques. Le détecteur **3** est relié à un circuit de mesure et de traitement **4** récupérant les m signaux délivrés par le détecteur **3.** Comme cela sera expliqué dans la suite de la description, ce circuit **4** traite les m signaux délivrés par le détecteur **3** pour caractériser la qualité du faisceau de rayons X. Ce circuit de mesure et de traitement **4** peut être réalisé de toute manière appropriée par des circuits électroniques ou ordinateurs.

Conformément à l'invention, le détecteur **3** à m jonctions p-n empilées en profondeur est un détecteur à multiples jonctions p-n enterrées ou un détecteur obtenu par des procédés de fabrication ou d'intégration microélectronique 3D. Quel que soit le mode de fabrication, le détecteur **3** est un composant monolithique intégrant les m jonctions p-n empilées en profondeur dans ce composant monolithique.

Selon un exemple préféré de réalisation, le détecteur monolithique **3** est un détecteur BMJ, acronyme de l'expression anglaise Buried Multiple pn Junction, et décrit par le brevet US 5 883 421. Ce type de détecteur a été jusque-là utilisé comme photodétecteur dans les domaines spectraux visible et proche infra-rouge et permet dans ce contexte, par exemple, avec quatre jonctions p-n enterrées, l'analyse quantitative de plusieurs marqueurs fluorescents émettant dans cette plage spectrale (Thierry Courcier et al., Sensors and Actuators B 190 (2014) 288- 2941). Par contre, ce type de détecteur n'a jamais été proposé pour la détection de photons X dans la littérature.

Dans ce mode préféré de réalisation, le détecteur **3** selon l'invention, comprend une structure de semi-conducteur **10** à base de silicium comportant successivement dans l'exemple illustré, quatre jonctions p-n respectivement **11** à **14.** Ces jonctions **11** à **14** sont enterrées respectivement à des profondeurs croissantes P1 à P4 prises à partir d'une surface du silicium $10_1$ dite face avant de la structure de semi-conducteur **10.** Ces jonctions **11** à **14** sont obtenues par la réalisation de cinq zones C1 à C5 avec des dopages différents alternativement p et n, réparties dans la profondeur du substrat de silicium. L'interface entre deux zones adjacentes détermine la profondeur de la jonction correspondante. Ainsi, la première jonction **11** se situe à l'interface entre la première zone C1 et la deuxième zone C2, la deuxième jonction **12** entre la deuxième zone C2 et la troisième zone C3, la troisième jonction **13** entre la troisième zone C3 et la quatrième zone C4 et la quatrième jonction **14** entre la quatrième zone C4 et la cinquième zone C5. Dans l'exemple illustré, les première à cinquième zones C1 à C5 sont respectivement de types P, N, P, N, P et sont obtenues par des procédés de fabrication microélectronique tels que l'implantation ionique et la diffusion. Il est possible d'inverser les dopages de la structure c'est-à-dire de types N, P, N, P, N, pour la fabrication du détecteur monolithique **3.**

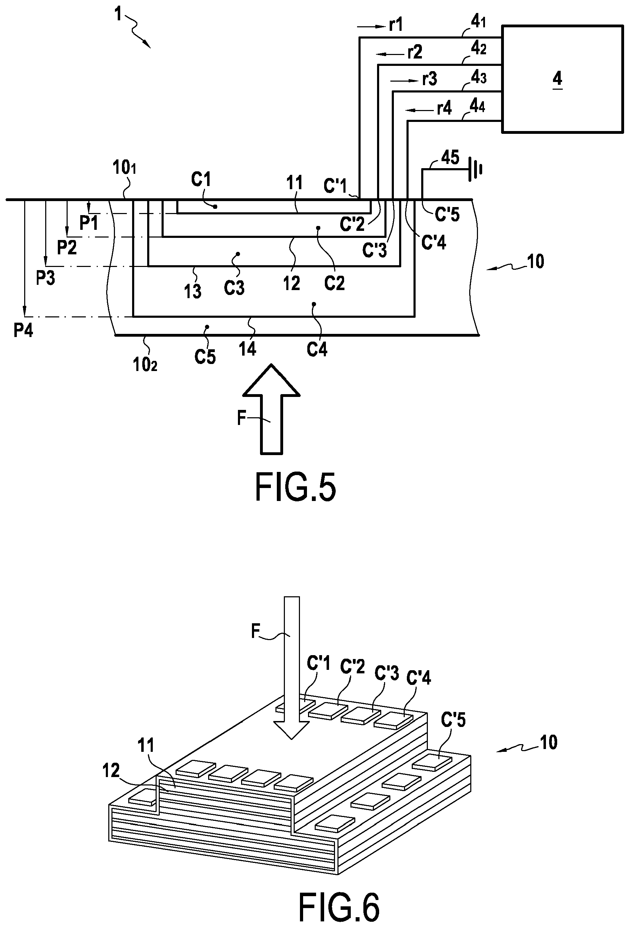

Dans l'exemple illustré à la **Fig. 4,** la surface $10_1$ de la structure **10** en relation de la première zone C1 comporte une partie destinée à recevoir le faisceau incident **F** de rayons X. Selon l'exemple de réalisation illustré à la **Fig. 5,** le détecteur monolithique **3** comporte un substrat aminci c'est-à-dire une cinquième et dernière zone C5 de faible épaisseur de sorte que l'atténuation du faisceau **F** par le détecteur reste limitée et qu'ainsi le détecteur puisse être considéré comme radio transparent. Dans cet exemple de réalisation, il peut être avantageux d'exposer au faisceau incident **F** de rayons X, la face arrière $10_2$ de la structure de semi-conducteur **10,** opposée de la surface avant $10_1$, pour exploiter le fait que les zones profondes sont typiquement moins dopées et donc permettent d'obtenir une meilleure sensibilité de détection pour la jonction correspondante (à savoir la quatrième jonction **14** dans l'exemple illustré) avec une zone de charge d'espace plus large, ce qui est bien adapté aux faibles débits de doses à proximité immédiate de la surface irradiée. Cette mise en œuvre permet un meilleur rapport signal à bruit sur l'ensemble des jonctions.

Par ailleurs, chacune des zones C1 à C5 est accessible sur la surface avant $10_1$, respectivement par une zone de connexion C'1 à C'5. Ces zones de connexion C'1 à C'5 permettent la connexion avec le circuit **4.** Ce circuit **4** comprend cinq branches $4_1$ à $4_5$ connectées respectivement aux zones de connexion C'1 à C'5. Alors que la cinquième branche $4_5$ est reliée à la masse, les quatre autres branches sont utilisées pour la lecture des signaux de sortie des jonctions **11** à **14** et permettent également de polariser ces jonctions avec des potentiels électriques adéquats.

Lorsqu'un faisceau de rayons X irradie la surface avant **10$_1$** de la structure **10,** il apparaît par effet photoélectrique, des courants internes traversant les quatre jonctions **11** à **14** et récupérés par les branches du circuit **4.** Ainsi, la première branche **4$_1$** récupère le courant **r$_1$** circulant dans la première jonction **11** alors que la deuxième branche **4$_2$** est parcourue par le courant **r$_2$** circulant dans les première et deuxième jonctions **11, 12.** De même, la troisième branche **4$_3$** récupère le courant **r$_3$** circulant dans les deuxième et troisième jonctions **12, 13** alors que la quatrième branche **4$_4$** récupère le courant **r$_4$** circulant dans les troisième et quatrième jonctions **13, 14.** D'un point de vue électronique, la structure de semi-conducteur **10** illustrée est équivalente à quatre photodiodes superposées. Ainsi, il doit être compris que le circuit **4** récupère pour un détecteur à m jonctions p-n, m signaux électriques **r$_i$** (i = 1, 2 ...m).

Le détecteur monolithique **3** décrit ci-dessus est réalisé par des procédés de fabrication microélectronique (épitaxie, implantation ionique, etc.). Il est à noter que dans le cas où le détecteur comporte un nombre élevé de jonctions p-n empilées de manière superposée comme illustré à la **Fig. 5,** un tel détecteur peut être réalisé par les techniques d'intégration microélectroniques tridimensionnelles.

Dans la mesure où le détecteur monolithique **3** est destiné à recevoir des faisceaux de rayons X présentant des énergies moyennes différentes, au moins trois de ces jonctions p-n empilées en profondeur sont distribuées dans la zone d'accroissement **Z$_a$** de débit de dose du faisceau de rayons X présentant le plus faible niveau d'énergie moyenne. Dans l'exemple illustré à la **Fig. 3,** trois de ces jonctions p-n sont distribuées selon des profondeurs **P1, P2, P3** dans la zone d'accroissement **Z$_{a1}$** de débit de dose du faisceau de rayons X présentant le plus faible niveau d'énergie moyenne à savoir <E$_1$>. Ces trois jonctions p-n empilées selon les profondeurs **P1, P2, P3** dans la zone d'accroissement **Z$_{a1}$** sont aussi nécessairement, distribuées dans la zone d'accroissement **Z$_{a2}$** de débit de dose du faisceau de rayons X présentant un niveau d'énergie moyenne plus élevé à savoir <E2>. Il est à noter que dans l'exemple illustré, quatre jonctions p-n sont distribuées selon des profondeurs **P1, P2, P3, P4** dans la zone d'accroissement **Z$_{a2}$** de débit de dose pour le faisceau de rayons X d'énergie moyenne <E2>.

Typiquement, au moins trois des jonctions p-n sont distribuées dans une zone de profondeur au plus égale à 20 μm à partir de la face exposée au faisceau de rayons X du détecteur monolithique **3.**

Bien entendu, le détecteur monolithique **3** peut comporter un nombre m de jonctions p-n significativement supérieur à trois pour améliorer la précision et la fiabilité de mesure, et pour élargir la plage énergétique de mesure. De même, il peut être prévu de distribuer ces m jonctions de manière régulière ou non, sur toute la zone d'accroissement de débit de dose du faisceau de rayons X dont l'énergie moyenne est la plus haute, tout en conservant au moins trois jonctions dans la zone d'accroissement de débit de dose du faisceau de rayons X dont l'énergie moyenne est la plus basse.

Selon une caractéristique avantageuse de réalisation, pour une plage d'énergie moyenne donnée, les m jonctions p-n sont empilées en profondeur de manière à positionner au moins trois jonctions p-n dans la zone d'accroissement de débit de dose pour le faisceau de rayons X présentant le plus faible niveau d'énergie moyenne, et au moins deux jonctions p-n autour de la profondeur caractéristique **P$_{max}$** pour le faisceau de rayons X présentant le plus fort niveau d'énergie moyenne.

Les m signaux (courants) délivrés par les m jonctions p-n du détecteur **3** sont mesurés et traités dans la mesure où ils permettent de caractériser la qualité du faisceau de rayons X.

Selon une caractéristique avantageuse de réalisation, le circuit de mesure et de traitement **4** est configuré pour récupérer les m signaux r$_i$ (i = 1,...m) provenant des jonctions p-n à partir des m signaux délivrés par le détecteur. Le circuit de mesure et de traitement **4** est configuré pour traiter les m signaux r$_i$ (i = 1,...m) en calculant m-1 valeurs de différentiation relative d$_i$ suivantes :

$$d_i = \left. \frac{(r_{i+1} - r_i)}{\frac{(r_{i+1} + r_i)}{2}} \right|_{i=1 \text{ à } m-1}$$

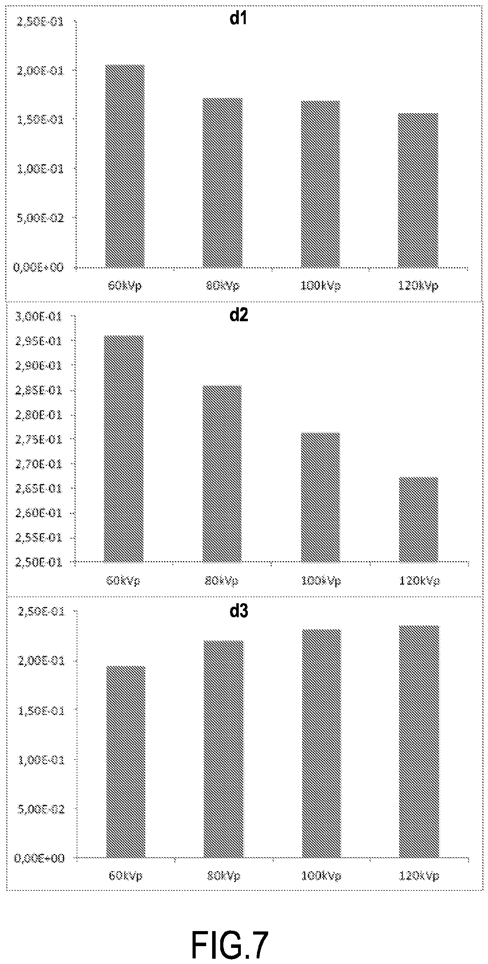

La **Fig. 7** illustre les valeurs de différentiation de premier ordre des quatre signaux délivrés par le détecteur à quatre jonctions p-n, pour différentes énergies moyennes du faisceau de rayons X. Les graphiques de la **Fig. 7** montrent, pour différentes énergies du faisceau de rayons X, les trois valeurs de différentiation de premier ordre **d$_1$, d$_2$, d$_3$** correspondant aux différentiations respectivement entre les signaux **r$_1$** et **r$_2$, r$_2$** et **r$_3$, r$_3$** et **r$_4$.**

L'analyse des valeurs de différentiation relative de premier ordre **d$_i$** permet d'apprécier notamment la pente du profil de dépôt de débit de dose sur la zone d'accroissement de débit de dose.

Selon une caractéristique avantageuse de réalisation, le circuit de mesure et de traitement **4** est configuré pour déterminer la vitesse d'accroissement du profil du débit de dose à partir des m-1 valeurs de différentiation relative de premier ordre **d$_i$,** cette vitesse d'accroissement du profil de débit de dose étant réalisée sur la zone d'accroissement **Za** avant l'équilibre électronique. Cette vitesse d'accroissement est dépendante de l'énergie moyenne du faisceau de rayons X incident, ce qui représente un paramètre pour spécifier la qualité du faisceau de rayons X incident.

Selon une autre caractéristique avantageuse de réalisation, le circuit de mesure et de traitement **4** est configuré pour, à partir des m-1 valeurs de différentiation relative de premier ordre $d_i$, à calculer les m-2 valeurs de différentiation relative du second ordre $d'_i$ suivantes :

$$d'_i = \left.\frac{(d_{i+1} - d_i)}{\frac{(d_{i+1} + d_i)}{2}}\right|_{i=1 \text{ à } m-2}$$

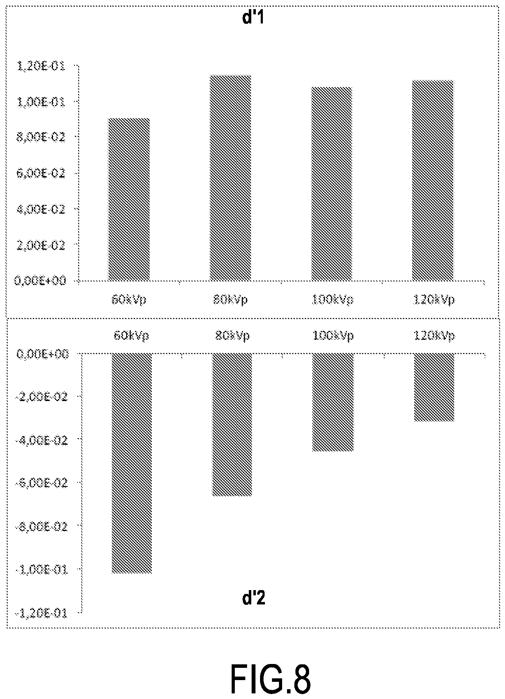

La **Fig. 8** illustre les valeurs de différentiation du second ordre à partir des quatre signaux délivrés par le détecteur, pour différentes énergies moyennes du faisceau de rayons X. Les graphiques de la **Fig. 8** montrent, pour différentes énergies du faisceau de rayons X, les deux valeurs de différentiation de second ordre $d'_1$, $d'_2$, correspondant aux différentiations respectivement entre les valeurs de premier ordre $d_1$ et $d_2$, $d_2$ et $d_3$.

L'analyse des valeurs de différentiation de second ordre $d'_i$ permet d'apprécier la courbure du profil de dépôt de débit de dose sur la zone d'accroissement de débit de dose. Cette courbure en valeurs négatives qui dépend de l'énergie moyenne du faisceau de rayons X incident, est une fonction monotone de l'énergie caractéristique du faisceau, ce qui représente un autre paramètre pour spécifier la qualité du faisceau de rayons X incident.

Selon une autre caractéristique avantageuse de réalisation, le circuit de mesure et de traitement **4** est configuré pour, à partir des m valeurs de signaux **r**, des m-1 valeurs de différentiation relative de premier ordre $d_i$ et des m-2 valeurs de différentiation relative du second ordre $d'_i$, à déterminer l'allure du profil de dépôt de débit de dose sur la zone d'accroissement de débit de dose ainsi que la profondeur caractéristique $P_{max}$. Cette détermination peut être réalisée par injection de ces valeurs dans un modèle paramétrique dédié (modèle empirique, analytique ou résultant de simulations Monte-Carlo).

Selon une autre caractéristique avantageuse de réalisation, le circuit de mesure et de traitement **4** est configuré pour déterminer la courbure du profil du débit de dose à partir des m-2 valeurs de différentiation relative du second ordre $d'_i$. Cette courbure en valeurs négatives est une fonction monotone de l'énergie moyenne d'un faisceau de rayons X incident. Elle est d'autant plus négative que l'énergie moyenne du faisceau de rayons X incident est basse, ce qui représente un paramètre pour spécifier la qualité du faisceau de rayons X incident. Pour une configuration d'irradiation donnée (filtration, diaphragme, collimation, angle d'incidence), lorsqu'on fait varier uniquement la haute tension appliquée sur le tube de rayons X, il existe une relation monotone entre la qualité du faisceau de rayons X incident et la courbure du profil. Cette relation monotone peut être prédéterminée par mesure ou simulation, et utilisée comme référence pour déterminer la qualité du faisceau à partir de la courbure du profil en zone d'accroissement de débit de dose.

Le circuit de mesure et de traitement **4** est également configuré pour exploiter d'une part, les m signaux **r** des jonctions p-n qui sont proportionnels au débit de dose du faisceau incident et d'autre part, la qualité de faisceau pour déterminer le débit de dose à des profondeurs données ou aux points d'intérêt. La qualité du faisceau est utilisée pour compenser la dépendance en énergie de la réponse du détecteur, et ainsi pour pouvoir déterminer le débit dose à des profondeurs données ou à des points d'intérêt.

Selon une autre caractéristique avantageuse de réalisation, le circuit de mesure et de traitement **4** est configuré de manière à constituer, à partir des m-1 valeurs de différentiation relative de premier ordre $d_i$ et des m-2 valeurs de différentiation relative du second ordre $d'_i$, un vecteur **D** de 2m-3 éléments défini par :

$$D = \begin{bmatrix} \alpha_1 \, d_1 \\ \vdots \\ \alpha_{m-1} \, d_{m-1} \\ \alpha'_1 \, d'_1 \\ \vdots \\ \alpha'_{m-2} \, d'_{m-2} \end{bmatrix}$$

où $\alpha_1 \ldots \alpha_{m-1}$, et $\alpha'_1 \ldots \alpha'_{m-2}$ sont des coefficients de pondération compris entre 0 et 1.

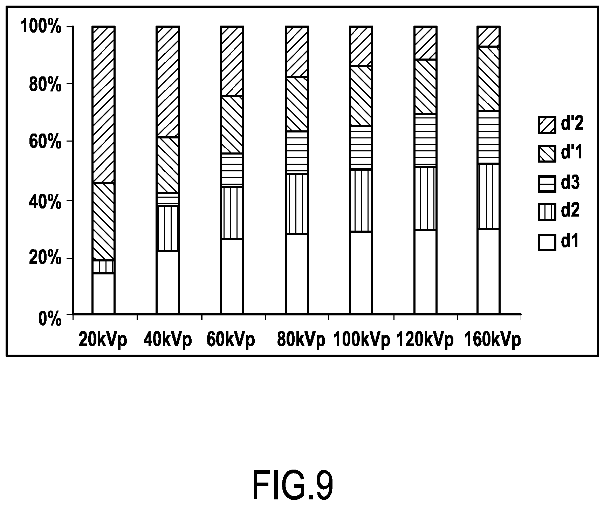

La **Fig. 9** présente les composantes du vecteur de différentiation relative **D** des signaux, pour plusieurs énergies d'un faisceau de rayons X. On observe sur cette figure que les contributions relatives de ces différentes composantes dépendent très fortement de l'énergie caractéristique du faisceau et peuvent être utilisées pour spécifier la qualité d'un faisceau de rayons X. On observe sur cette **Figure** que la répartition de ces différentes composantes est spécifique pour chaque énergie caractéristique du faisceau et peut être utilisée pour spécifier la qualité du faisceau de rayons X.

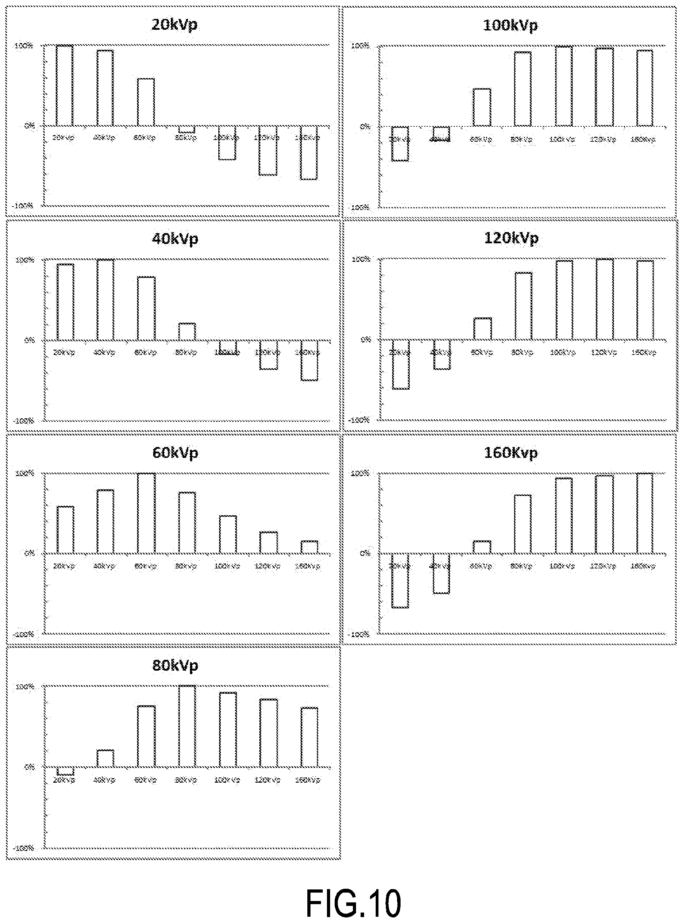

La **Fig. 10** illustre les valeurs de corrélation pour différentes énergies du faisceau de rayons X, entre le vecteur de différentiation relative **D** pour le faisceau de rayons X et des vecteurs de référence tabulés. Le maximum de corrélation indique sans ambiguïté l'énergie du faisceau incident et permet ainsi de spécifier la qualité du faisceau de rayons X incident.

L'objet de l'invention trouve une application avantageuse pour un équipement générateur de rayons X dont les n valeurs de haute tension appliquée sur le tube permettent d'obtenir n spectres de rayons X incidents différents correspondant à des qualités de faisceau différentes. Le circuit de mesure et de traitement **4** est configuré pour déterminer la corrélation vectorielle entre le vecteur **D** mesurée et les n vecteurs de référence tabulés (obtenus, pour chaque valeur de la haute tension, par des mesures ou des simulations de Monte-Carlo). Le maximum de corrélation indique la haute tension utilisée et permet de spécifier la qualité du faisceau de rayons X correspondante.

De même, pour un équipement générateur de rayons X dont les réglages y compris en filtration permettent d'obtenir k configurations d'utilisation avec des qualités de faisceau différentes, le circuit de mesure et de traitement **4** est configuré pour déterminer la corrélation vectorielle entre le vecteur **D** mesuré et k vecteurs de référence tabulés pour ces configurations (obtenus par des mesures de calibration ou des simulations de Monte-Carlo). Le maximum de corrélation indique la configuration utilisée et permet de spécifier la qualité du faisceau de rayons X.

Le dispositif **1** selon l'invention permet de caractériser la qualité d'un faisceau **F** de rayons X, à l'aide d'une des méthodes qui découlent directement de la description ci-dessus. En particulier, le dispositif et le procédé faisant l'objet de l'invention peuvent permettre de caractériser en plus de la qualité d'un faisceau de rayons X, d'autres paramètres radiologiques d'intérêt dosimétrique comme par exemple, le débit de dose, la haute tension appliquée sur le tube (kVp), l'épaisseur de demi-atténuation (HVL), la filtration totale, la durée des impulsions, la fréquence des impulsions et la dose par impulsion. Par ailleurs, l'estimation de la qualité de faisceau pourra servir pour compenser la dépendance en énergie de la réponse des diodes p-n sur silicium.

Il découle de la description qui précède que le procédé de caractérisation selon l'invention comporte les étapes suivantes :

- mettre à disposition un détecteur monolithique intégrant m jonctions p-n empilées ($m \geq 3$) en profondeur dudit détecteur avec au moins trois jonctions distribuées dans la zone d'accroissement de débit de dose ;
- projeter ledit faisceau de rayons X sur le détecteur monolithique ;
- récupérer les m signaux **r** délivrés par les jonctions p-n du détecteur ;
- et traiter les m signaux **r** pour caractériser la qualité du faisceau de rayons X.

Les m signaux **r** sont ensuite traités par le circuit de mesure et de traitement **4** comme déjà décrit.

## Revendications

**1.** Procédé pour caractériser la qualité d'un faisceau de rayons X comportant un profil connu de dépôt de dose dans un corps présentant une zone d'accroissement ($\mathbf{Z_{a1}}$, $\mathbf{Z_{a2}}$) de débit de dose à l'intérieur dudit corps s'étendant entre la surface d'entrée du faisceau et une profondeur caractéristique ($\mathbf{P_{max}}$) où le débit de dose déposé est maximal, le procédé comportant les étapes suivantes :

- mettre à disposition un détecteur monolithique intégrant m jonctions p-n empilées ($m \geq 3$) en profondeur dudit détecteur avec au moins trois jonctions distribuées dans la zone d'accroissement de débit de dose ;
- projeter ledit faisceau de rayons X sur le détecteur monolithique ;
- récupérer les m signaux (**r**) délivrés par les jonctions p-n du détecteur ;
- et traiter les m signaux (**r**) pour caractériser la qualité du faisceau de rayons X.

**2.** Procédé selon la revendication 1, **caractérisé en ce qu'**il consiste à traiter les m signaux (**r**) en calculant m-1 valeurs de différentiation relative du premier ordre $d_i$ suivantes :

$$d_i = \left. \frac{(r_{i+1} - r_i)}{\frac{(r_{i+1} + r_i)}{2}} \right|_{i=1 \text{ à } m-1}$$

**3.** Procédé selon la revendication 2, **caractérisé en ce qu'**il consiste à partir des m-1 valeurs de différentiation relative de premier ordre ($\mathbf{d_i}$), à calculer les m-2 valeurs de différentiation relative du second ordre ($\mathbf{d'_i}$) suivantes :

$$d'_i = \left. \frac{(d_{i+1} - d_i)}{\frac{(d_{i+1} + d_i)}{2}} \right|_{i=1 \text{ à } m-2}$$

**4.** Procédé selon les revendications 1 à 3, **caractérisé en ce qu'**il consiste, à partir des m valeurs de signaux r, m-1 valeurs de différentiation relative de premier ordre $d_i$ et des m-2 valeurs de différentiation relative du second ordre $d'_i$, à déterminer l'allure du profil de dépôt de débit de dose sur la zone d'accroissement de débit de dose ainsi que la profondeur caractéristique ($\mathbf{P_{max}}$).

**5.** Procédé selon les revendications 1 à 4, **caractérisé en ce qu'**il consiste à déterminer la courbure du profil du débit de dose à partir des m-2 valeurs de différentiation relative du second ordre ($\mathbf{d'_i}$), cette courbure en zone d'accroissement de débit de dose prend des valeurs négatives et présente une fonction monotone de l'énergie caractéristique du faisceaux, permettant de remonter à la qualité du faisceau de rayons X incident.

**6.** Procédé selon les revendications 1 à 4, **caractérisé en ce qu'**il consiste à déterminer la vitesse d'accroissement du profil du débit de dose à partir des m-1 valeurs de différentiation relative de premier or-

dre ($d_i$), cette vitesse d'accroissement permettant de remonter à la qualité du faisceau de rayons X incident.

7. Procédé selon les revendications 1 à 6, **caractérisé en ce qu'**il consiste à partir des m-1 valeurs de différentiation relative de premier ordre ($d_i$) et des m-2 valeurs de différentiation relative du second ordre ($d'_i$), à constituer un vecteur de 2m-3 éléments défini par :

$$D = \begin{bmatrix} \alpha_1\, d_1 \\ \vdots \\ \alpha_{m-1}\, d_{m-1} \\ \alpha'_1\, d'_1 \\ \vdots \\ \alpha'_{m-2}\, d'_{m-2} \end{bmatrix}$$

où $\alpha_1 \ldots \alpha_{m-1}$, et $\alpha'_1 \ldots \alpha'_{m-2}$ sont des coefficients de pondération compris entre 0 et 1.

8. Procédé selon la revendication 7, **caractérisé en ce qu'**il consiste, pour un équipement générateur de rayons X dont les réglages en énergie permettent d'obtenir n spectres avec des qualité de faisceau différentes, à déterminer la corrélation vectorielle entre le vecteur (**D**) mesuré et n vecteurs de référence prédéterminés correspondants à ces n spectres, le maximum de corrélation indiquant le spectre du faisceau de rayons X et donc la qualité de ce faisceau.

9. Procédé selon la revendication 7, **caractérisé en ce qu'**il consiste, pour un équipement générateur de rayons X dont les réglages y compris en filtration permettent d'obtenir k configurations d'utilisation avec des qualités de faisceau différentes, à déterminer la corrélation vectorielle entre le vecteur (**D**) mesuré et k vecteurs de référence prédéterminés pour ces configurations, le maximum de corrélation indiquant la configuration utilisée et donc la qualité du faisceau de rayons X.

10. Procédé selon les revendications 1 à 9, **caractérisé en ce qu'**il consiste à exploiter d'une part, les m signaux (**r**) des jonctions p-n qui sont proportionnels au débit de dose du faisceau incident et d'autre part, la qualité de faisceau pour déterminer le débit de dose à une profondeur donnée.

11. Procédé selon l'une des revendications précédentes, **caractérisé en ce qu'**il consiste à répartir les m jonctions p-n de manière à positionner au moins trois jonctions p-n dans la zone d'accroissement de débit de dose pour le faisceau de rayons X avec le plus faible niveau d'énergie, et au moins deux jonctions p-n à proximité de la profondeur caractéristique

($P_{max}$) pour le faisceau de rayons X avec le plus fort niveau d'énergie.

12. Dispositif adapté pour caractériser la qualité d'un faisceau de rayons X comportant un profil connu de dépôt de dose dans un corps, présentant une zone d'accroissement de débit de dose à l'intérieur dudit corps s'étendant entre la surface d'entrée du faisceau et une profondeur caractéristique ($P_{max}$) où le débit de dose déposé est maximal, **caractérisé en ce que** le dispositif comporte :

- un détecteur monolithique à m jonctions p-n empilées en profondeur dudit détecteur avec au moins trois desdites jonctions distribuées dans une zone correspondant à la zone d'accroissement de débit de dose pour l'indice de qualité de faisceau le plus faible de la plage de mesure ;
- un circuit de mesure et de traitement (**4**) relié au détecteur monolithique, le circuit de mesure avec la méthode de traitement (**4**) récupérant les m signaux délivrés par les m jonctions p-n du détecteur et étant adapté pour traiter les m signaux pour caractériser la qualité du faisceau de rayons X.

13. Dispositif selon la revendication 12, **caractérisé en ce que** le détecteur monolithique à m jonctions p-n empilées en profondeur est un détecteur à multiples jonctions p-n enterrées ou un détecteur obtenu par des procédés de fabrication ou d'intégration microélectronique 3D.

14. Dispositif selon les revendications 12, **caractérisé en ce qu'**au moins trois des jonctions p-n sont distribuées dans une zone de profondeur au plus égale à 20 $\mu$m à partir de la face d'implantation du détecteur monolithique.

15. Dispositif selon l'une des revendications 12 à 14, **caractérisé en ce que** le circuit de mesure et de traitement est adapté pour :

- récupérer les m signaux $r_i$ provenant des jonctions p-n à partir des m signaux délivrés par le détecteur ;
- calculer les m-1 grandeurs de différentiation relative suivantes :

$$d_i = \left. \frac{(r_{i+1} - r_i)}{\dfrac{(r_{i+1} + r_i)}{2}} \right|_{i=1 \text{ à } m-1}$$

- calculer, à partir des m-1 grandeurs de différentiation relative, les m-2 grandeurs de différentiation relative du second ordre suivantes :

$$d'_i = \frac{(d_{i+1} - d_i)}{\dfrac{(d_{i+1} + d_i)}{2}}\Bigg|_{i=1\,\grave{a}\,m-2}$$

**16.** Dispositif selon la revendication 15, **caractérisé en ce que** le circuit de mesure et de traitement est adapté pour calculer le maximum de la corrélation vectorielle entre n vecteurs de référence et le vecteur (**D**) à 2m-3 éléments suivant :

$$D = \begin{bmatrix} \alpha_1\,d_1 \\ \vdots \\ \alpha_{m-1}\,d_{m-1} \\ \alpha'_1\,d'_1 \\ \vdots \\ \alpha'_{m-2}\,d'_{m-2} \end{bmatrix}$$

où $\alpha_1 \dots \alpha_{m-1}$, et $\alpha'_1 \dots \alpha'_{m-2}$ sont des coefficients de pondération compris entre 0 et 1.

**Patentansprüche**

**1.** Verfahren zur Charakterisierung der Qualität eines Röntgenstrahls, aufweisend ein bekanntes Dosisdepotprofil in einem Körper, aufweisend eine Zuwachszone ($Z_{a1}$, $Z_{a2}$) der Dosisleistung im Inneren des Körpers, die sich zwischen der Eintrittsfläche des Strahls und einer charakteristischen Tiefe ($P_{max}$) erstreckt, wo die deponierte Dosisleistung maximal ist, wobei das Verfahren die folgenden Schritte aufweist:

- Bereitstellen eines monolithischen Detektors mit m gestapelten Verbindungen p-n ($m \geq 3$) in der Tiefe des Detektors mit mindestens drei in der Dosisleistungs-Zuwachszone verteilten Verbindungen;
- Projizieren des Röntgenstrahls auf den monolithischen Detektor;
- Rückgewinnen der m von den Verbindungen p-n des Detektors gelieferten Signale (**r**);
- und Verarbeiten der m Signale (**r**), um die Qualität des Röntgenstrahls zu charakterisieren.

**2.** Verfahren nach Anspruch 1, **dadurch gekennzeichnet, dass** es darin besteht, die m Signale (**r**) durch Berechnen von m-1 folgenden Werten relativer Differentiation der ersten Ordnung $d_i$ zu verarbeiten:

$$d_i = \frac{(r_{i+1} - r_i)}{\dfrac{(r_{i+1} + r_i)}{2}}\Bigg|_{i=1\,bei\,m-1}$$

**3.** Verfahren nach Anspruch 2, **dadurch gekennzeichnet, dass** es darin besteht, ausgehend von den m-1 Werten relativer Differentiation erster Ordnung ($d_i$) die m-2 folgenden Werte relativer Differentiation der zweiten Ordnung ($d'_i$) zu berechnen:

$$d'_i = \frac{(d_{i+1} - d_i)}{\dfrac{(d_{i+1} + d_i)}{2}}\Bigg|_{i=1\,bei\,m-2}$$

**4.** Verfahren nach den Ansprüchen 1 bis 3, **dadurch gekennzeichnet, dass** es ausgehend von den m Signalwerten r m-1 Werte relativer Differentiation erster Ordnung $d_i$ und m-2 Werten relativer Differentiation der zweiten Ordnung $d'_i$ darin besteht, das Aussehen des Dosisleistungs-Depotprofils auf der Dosisleistungs-Zuwachszone sowie die charakteristische Tiefe ($P_{max}$) zu bestimmen.

**5.** Verfahren nach den Ansprüchen 1 bis 4, **dadurch gekennzeichnet, dass** es darin besteht, die Krümmung des Dosisleistungsprofils ausgehend von den m-2 Werten relativer Differentiation der zweiten Ordnung ($d'_i$) zu bestimmen, wobei diese Krümmung in der Dosisleistungs-Zuwachszone negative Werte annimmt und eine monotone Funktion der charakteristischen Energie des Strahls darstellt, die erlaubt, auf die Qualität des einfallenden Röntgenstrahls zu schließen.

**6.** Verfahren nach den Ansprüchen 1 bis 4, **dadurch gekennzeichnet, dass** es darin besteht, die Zuwachsgeschwindigkeit des Dosisleistungsprofils ausgehend von den m-1 Werten relativer Differentiation erster Ordnung ($d_i$) zu bestimmen, wobei diese Zuwachsgeschwindigkeit erlaubt, auf die Qualität des einfallenden Röntgenstrahls zu schließen.

**7.** Verfahren nach den Ansprüchen 1 bis 6, **dadurch gekennzeichnet, dass** es darin besteht, ausgehend von den m-1 Werten relativer Differentiation erster Ordnung ($d_i$) und den m-2 Werten relativer Differentiation der zweiten Ordnung ($d'_i$) einen Vektor von 2m-3 Elementen zu bilden, definiert durch:

$$D = \begin{bmatrix} \alpha_1 d_1 \\ \vdots \\ \alpha_{m-1} d_{m-1} \\ \alpha'_1 d'_1 \\ \vdots \\ \alpha'_{m-2} d'_{m-2} \end{bmatrix}$$

wobei $\alpha_1 \ldots \alpha_{m-1}$ und $\alpha'_1 \ldots \alpha'_{m-2}$ Wichtungskoeffizienten sind, die zwischen 0 und 1 liegen.

8. Verfahren nach Anspruch 7, **dadurch gekennzeichnet, dass** es für eine Ausrüstung, die Röntgenstrahlen erzeugt, deren energetische Einstellungen erlauben, n Spektren mit unterschiedlichen Strahlqualitäten zu erhalten, darin besteht, die vektorielle Korrelation zwischen dem gemessenen Vektor (**D**) und n zuvor bestimmten Referenzvektoren zu bestimmen, die diesen n Spektren entsprechen, wobei das Korrelationsmaximum das Spektrum des Röntgenstrahls und damit die Qualität dieses Strahls angibt.

9. Verfahren nach Anspruch 7, **dadurch gekennzeichnet, dass** es für eine Ausrüstung, die Röntgenstrahlen erzeugt, deren inklusive Filtrations-Einstellungen erlauben, k Benutzungskonfigurationen mit unterschiedlichen Strahlqualitäten zu erhalten, darin besteht, die Vektorkorrelation zwischen dem gemessenen Vektor (**D**) und k vorher festgelegten Vektoren für diese Konfigurationen zu bestimmen, wobei das Korrelationsmaximum die verwendete Korrelation und damit die Qualität des Röntgenstrahls angibt.

10. Verfahren nach den Ansprüchen 1 bis 9, **dadurch gekennzeichnet, dass** es darin besteht, zum einen die m Signale (**r**) der Verbindungen p-n zu nutzen, die proportional zur Dosisleistung des einfallenden Strahls sind, und zum anderen die Strahlqualität, um die Dosisleistung in einer bestimmten Tiefe zu bestimmen.

11. Verfahren nach einem der vorangehenden Ansprüche, **dadurch gekennzeichnet, dass** es darin besteht, die m Verbindungen p-n derart zu verteilen, dass mindestens drei Verbindungen p-n in der Dosisleistungs-Zuwachszone für den Röntgenstrahls mit dem niedrigsten Energieniveau und mindestens zwei Verbindungen p-n in der Nähe der charakteristischen Tiefe (**P$_{max}$**) für den Röntgenstrahl mit dem höchsten Energieniveau positioniert werden.

12. Vorrichtung, die geeignet ist, die Qualität eines Röntgenstrahls zu charakterisieren, aufweisend ein bekanntes Dosisdepotprofil in einem Körper, aufweisend eine Dosisleistungs-Zuwachszone im Inneren des Körpers, die sich zwischen der Eintrittsfläche des Strahls und einer charakteristischen Tiefe (**P$_{max}$**) erstreckt, wo die deponierte Dosisleistung maximal ist, **dadurch gekennzeichnet, dass** die Vorrichtung aufweist:

- einen monolithischen Detektor mit m gestapelten Verbindungen p-n in der Tiefe des Detektors mit mindestens drei der Verbindungen, die in einer Zone verteilt sind, die der Dosisleistungs-Zuwachszone für den kleinsten Strahlqualitätsindex des Messbereichs entspricht;
- einen Mess- und Verarbeitungskreis (**4**), der mit dem monolithischen Detektor verbunden ist, wobei der Messkreis mit der Verarbeitungsmethode (**4**) die von den m Verbindungen p-n des Detektors gelieferten m Signale zurückgewinnt, die von den m Verbindungen p-n des Detektors geliefert werden und geeignet ist, die m Signale zu verarbeiten, um die Qualität des Röntgenstrahls zu charakterisieren.

13. Vorrichtung nach Anspruch 12, **dadurch gekennzeichnet, dass** der monolithische Detektor mit m gestapelten Verbindungen p-n in der Tiefe ein Detektor mit multiplen eingelassenen Verbindungen p-n oder ein Detektor ist, der durch 3D-Herstellungs- oder mikroelektronische Integrationsverfahren erhalten wird.

14. Vorrichtung nach den Ansprüchen 12, **dadurch gekennzeichnet, dass** mindestens drei der Verbindungen p-n in einer Tiefenzone verteilt sind, die höchsten gleich 20 $\mu$m ab der Implantationsfläche des monolithischen Detektors ist.

15. Vorrichtung nach einem der Ansprüche 12 bis 14, **dadurch gekennzeichnet, dass** der Mess- und Verarbeitungskreis geeignet ist, um:

- die m Signale r$_i$, die von den Verbindungen p-n kommen, ausgehend von den m von dem Detektor gelieferten Signalen zurückzugewinnen;
- die m-1 folgenden Größen relativer Differentiation zu berechnen:

$$d_i = \frac{(r_{i+1} - r_i)}{\frac{(r_{i+1} + r_i)}{2}} \bigg|_{i=1 \; bei \; m-1}$$

- ausgehend von den m-1 Größen relativer Differentiation die m-2 folgenden Größen relativer Differentiation der zweiten Ordnung zu berechnen:

$$d'_i = \frac{(d_{i+1} - d_i)}{\frac{(d_{i+1} + d_i)}{2}}\Bigg|_{i=1 \; bei \; m-2}$$

**16.** Vorrichtung nach Anspruch 15, **dadurch gekennzeichnet, dass** der Mess- und Verarbeitungskreis geeignet ist, das Maximum der Vektorkorrelation zwischen n Referenzvektoren und dem Vektor (**D**) mit 2m-3 folgenden Elementen zu berechnen:

$$D = \begin{bmatrix} \alpha_1 d_1 \\ \vdots \\ \alpha_{m-1} d_{m-1} \\ \alpha'_1 d'_1 \\ \vdots \\ \alpha'_{m-2} d'_{m-2} \end{bmatrix}$$

wobei $\alpha_{1...} \alpha_{m-1}$ und $\alpha'_{1...} \alpha'_{m-2}$ Wichtungskoeffizienten sind, die zwischen 0 und 1 liegen.

**Claims**

**1.** A method for characterizing the quality of an X-ray beam comprising a known profile of dose deposit in a body having a zone of increasing (**Z$_{a1}$, Z$_{a2}$**) dose rate inside said body extending between the input surface of the beam and a characteristic depth (**P$_{max}$**) where the deposited dose rate is maximal, the method comprising the following steps:

- providing a monolithic detector integrating m junctions p-n stacked (m ≥ 3) depthwise of said detector with at least three junctions distributed in the zone of increasing dose rate;
- projecting said X-ray beam onto the monolithic detector;
- retrieving the m signals (**r**) delivered by the junctions p-n of the detector;
- and processing the m signals (**r**) for characterizing the quality of the X-ray beam.

**2.** The method according to claim 1, **characterized in that** it consists of processing the m signals (**r**) by calculating m-1 relative differentiation values of the following first order d$_i$:

$$d_i = \frac{(r_{i+1} - r_i)}{\frac{(r_{i+1} + r_i)}{2}}\Bigg|_{i=1 \; at \; m-1}$$

**3.** The method according to claim 2, **characterized in**

**that** from the m-1 relative differentiation values of first order (**d$_i$**) it consists of calculating the m-2 relative differentiation values of the following second order (**d'$_i$**) :

$$d'_i = \frac{(d_{i+1} - d_i)}{\frac{(d_{i+1} + d_i)}{2}}\Bigg|_{i=1 \; at \; m-2}$$

**4.** The method according to claims 1 to 3, **characterized in that**, from the m values of signals r, m-1 relative differentiation values of first order d$_i$ and of the m-2 relative differentiation values of the second order d'$_i$, it consists of determining the appearance of the profile of dose deposit rate on the zone of increasing dose rate as well as the characteristic depth (**P$_{max}$**).

**5.** The method according to claims 1 to 4, **characterized in that** it consists of determining the curvature of the profile of the dose rate from the m-2 relative differentiation values of the second order (**d'$_i$**), this curvature in zone of increasing dose rate assuming negative values and presenting a monotone function of the power characteristic of the beams, coming up to the quality of the incident X-ray beam.

**6.** The method according to claims 1 to 4, **characterized in that** it consists of determining the growth rate of the profile of the dose rate from the m-1 relative differentiation values of first order (**d$_i$**), this growth rate coming up to the quality of the incident X-ray beam.

**7.** The method according to claims 1 to 6, **characterized in that** from the m-1 relative differentiation values of first order (**d$_i$**) and the m-2 relative differentiation values of the second order (**d'$_i$**), it consists of constituting a vector of 2m-3 elements defined by:

$$D = \begin{bmatrix} \alpha_1 d_1 \\ \vdots \\ \alpha_{m-1} d_{m-1} \\ \alpha'_1 d'_1 \\ \vdots \\ \alpha'_{m-2} d'_{m-2} \end{bmatrix}$$

where $\alpha_{1...} \alpha_{m-1}$, and $\alpha'_{1...} \alpha'_{m-2}$ are weighting coefficients between 0 and 1.

**8.** The method according to claim 7, **characterized in that** it consists, for equipment generating X-rays whereof the power settings produce n spectra with different beam qualities, determining the vectorial correlation between the measured vector (**D**) and n predetermined reference vectors corresponding to these n spectra, the correlation maximum indicating the spectrum of the X-ray beam and therefore the quality of this beam.

9. The method according to claim 7, **characterized in that**, for equipment generating X-rays whereof the settings including filtration produce k use configurations with different beam qualities, it consists of determining the vectorial correlation between the measured vector (**D**) and k reference vectors predetermined for these configurations, the correlation maximum indicating the configuration used and therefore the quality of the X-ray beam.

10. The method according to claims 1 to 9, **characterized in that** it consists of exploiting both the m signals (**r**) of the junctions p-n which are proportional to the dose rate of the incident beam and also the quality of beam for determining the dose rate at a given depth.

11. The method according to any one of the preceding claims, **characterized in that** it consists of distributing the m junctions p-n so as to position at least three junctions p-n in the zone of increasing dose rate for the X-ray beam with the lowest level of power, and at least two junctions p-n near the characteristic depth (**P$_{max}$**) for the X-ray beam with the highest level of power.

12. A device adapted for characterizing the quality of an X-ray beam comprising a known profile of dose deposit in a body having a zone of increasing dose rate inside said body extending between the input surface of the beam and a characteristic depth (**P$_{max}$**) where the deposited dose rate is maximal, **characterized in that** the device comprises

  - a monolithic detector having m junctions p-n stacked depthwise of said detector with at least three of said junctions distributed in a zone corresponding to the zone of increasing dose rate for the lowest beam quality index of the measuring zone;
  - a measuring and processing circuit (**4**) connected to the monolithic detector, the measuring circuit with the processing method (**4**) retrieving the m signals delivered by the m junctions p-n of the detector and being adapted for processing the m signals for characterizing the quality of the X-ray beam.

13. The device according to claim 12, **characterized in that** the monolithic detector having m junctions p-n stacked depthwise is a detector having multiple buried junctions p-n or a detector obtained by manufacturing processes or 3D microelectronic integration.

14. The device according to claims 12, **characterized in that** at least three of the junctions p-n are distributed in a depth zone at most equal to 20 μm from the implantation face of the monolithic detector.

15. The device according to any one of claims 12 to 14, **characterized in that** the measuring and processing circuit is adapted for:

  - retrieving the m signals r$_i$ originating from the junctions p-n from the m signals delivered by the detector;
  - calculating the following m-1 relative differentiation magnitudes:

$$d_i = \left. \frac{(r_{i+1} - r_i)}{\frac{(r_{i+1} + r_i)}{2}} \right|_{i=1\ at\ m-1}$$

  - calculating, from the relative m-1 differentiation magnitudes, the relative m-2 differentiation magnitudes of the following second order:

$$d'_i = \left. \frac{(d_{i+1} - d_i)}{\frac{(d_{i+1} + d_i)}{2}} \right|_{i=1\ at\ m-2}$$

16. The device according to claim 15, **characterized in that** the measuring and processing circuit is adapted for calculating the maximum of the vectorial correlation between n reference vectors and the following vector (D) having 2m-3 elements:

$$D = \begin{bmatrix} \alpha_1 d_1 \\ \vdots \\ \alpha_{m-1} d_{m-1} \\ \alpha'_1 d'_1 \\ \vdots \\ \alpha'_{m-2} d'_{m-2} \end{bmatrix}$$

where $\alpha_1 \ldots \alpha_{m-1}$, and $\alpha'_1 \ldots \alpha'_{m-2}$ are weighting coefficients between 0 and 1.

FIG.1

FIG.2

FIG.3

FIG.4

FIG.5

FIG.6

FIG.7

FIG.8

FIG.9

FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013016808 A1
- US 5761270 A
- US 9405021 B
- US 5883421 A

**Littérature non-brevet citée dans la description**

- **ROBIN HILL et al.** *Phys. Med. Bio.,* 2014, vol. 59, R183-R231
- **MA et al.** *Medical Physics,* 2001, vol. 28 (6
- **K. R. ROSSER.** An alternative beam quality index for medium-energy x-ray dosimetry. *Phys. Med. Biol.,* 1998, vol. 43, 587-598
- **THIERRY COURCIER et al.** *Sensors and Actuators B,* 2014, vol. 190, 288-2941